# EUROPEAN PATENT SPECIFICATION

(11) **EP 1 243 175 B1**
(45) Date of publication and mention of the grant of the patent: **23.04.2008**
(21) Application number: 02004060.6
(22) Date of filing: 23.02.2002
(51) Int. Cl.: A01F 12/44, A01F 12/10

(54) **Combine harvester**
Mähdrescher
Moissonneuse-batteuse

(30) Priority: 19.03.2001 GB 0106725
(43) Date of publication of application: 25.09.2002
(73) Proprietor: CLAAS Selbstfahrende Erntemaschinen GmbH, 33428 Harsewinkel (DE)
(72) Inventor: Barrelmeyer, Thomas, 33775 Versmold (DE); Visagie, Andrie, Bothaville 9660 (ZA)

(56) References cited:
- EP-A- 1 147 702
- GB-A- 1 296 191
- US-A- 3 464 419
- US-A- 4 282 703
- US-A- 4 700 717
- US-A- 5 344 367
- US-A- 5 454 758

## Description

The present invention relates to a combine harvester according to the preamble of claim 1.

Such an axial flow type combine harvester is known from US 3,464,419. According to the disclosure of this very early patent concerning axial flow type combine harvesters the harvested material was fed into the rotor housing from a position above of the shaft of the separation rotor. To ease the flow of harvested good into the rotor housing, a contoured cowling forming a throat having a bottom surface above the shaft of the axial flow combine cylinder was suggested. However, the feeding of harvested good into the rotor housing didn't work properly, and the axial flow type combines introduced to the markets later offered a distribution of harvested good into the rotor housing from its front or from underneath the rotor housing.

An example for the distribution of harvested good into the rotor housing of an axial flow type combine harvester is shown in DD 216 846. To transfer harvested good from the feeder house into the axial rotor housing, there is an infeed plate arranged at the bottom of the front end of the rotor housing, so that the harvested good is distributed into the rotor housing in the bottom section of the cross section through the rotor housing. The infeed plate shows a special design to ease the transfer of harvested good into the rotor housing. Crop on one side of the infeed plate is curled into the bottom of the rotor by a conical section. On the other side of the rotor housing there is ramp which lifts up the harvested good and feeds it into the rotor from a higher position. Crop from the middle section is introduced into the rotor by a long-streching triangular bottom plate.

In PCT/US 97/02432 a new concept for separating the kernel fraction from the straw and chaff fractions of the harvested good has been disclosed. In the drawings it is shown in a very simplified manner that the harvested good should be conveyed into the rotor housing from above. However, no details have been disclosed how this should work properly under all harvesting conditions.

Accordingly, it is the subject of this invention to provide a design of the feeding zone which allows a feeding of harvested good from the feeder house into the rotor housing from a position above of the shaft of the separation rotor with high capacity and safe function for all kinds of crop.

This object is achieved with a combine harvester having the features of the characterizing portion of claim 1. The separation rotor of this combine harvester is equipped with auger blades in the feeding zone, a rotating element is arranged with a crosswise rotation axis, said axis being located higher than the front shaft stubble of the separation rotor, the rotating element feeds the harvested good underneath its rotation axis towards the feeding opening, the feeding opening is surrounded by sheet metal which projects up to the width of the feeder house and which is shaped into a concave bend so that it is adapted at least partially to the circumferential shape of the rotating element, and the feeding opening is wider at the bottom than at the top. It may be noted at this occasion that the term ''separation rotor" isn't meant to be limited in its interpretation. This term is used for simplification of the description, but it needs to be understood, that with the term "separation rotor" also threshing elements and a threshing function of that element is covered, as well as intake elements which might be fixed on the separation rotor shaft and the intake function of taking the harvested good into the rotor housing. It is also noted that the separation rotor does not need to be manufactured as just one piece, there also may be sections of the rotor which are assembled, combined in their function or supported from several supporting elements.

The subject of this invention can also be achieved, if the separation rotor is equipped with auger blades in the feeding zone, a rotating element is arranged with a crosswise rotation axis, said axis being located higher than the front shaft stubble of the separation rotor, the rotating element feeds the harvested good underneath its rotation axis towards the feeding opening, the rotating element is accommodated in the rear portion of the feeder house, and the rotation axis of the rotating element is coaxial with the rotation axis of the feeder house. In such an arrangement it is sufficient to use only two rotating elements for the transport of harvested good from the front end to the feeding opening of the rotor housing. Such an arrangement is very efficient and simple.

It is a feature of this invention that in the feeding opening there is a plurality of floors which guide the harvested material into spaces defined by the auger blades of the separation rotor. The floors guide the harvested material into different levels of the feeder opening, so that the harvested good is well accepted by the separation rotor and a smooth transition from a linear movement into a helical movement can be achieved.

It is also advantageous if the diameter of the auger blades is tapered towards the front. On the one hand it allows that the separation rotor can reach down to a very low level, without the danger that the front tips of the augers might limit the ground clearance of the combine, and on the other hand it is advantageous if the circumferential speed of the auger tips is lower at the front end of the separation rotor due to the reduced diameter and increasing backwardly due to the increasing diameter, because kernel breakage is reduced due to lower circumferential speeds. The acceleration process is stretched over a longer distance. Last but not least a better adaption of the auger blades towards the circumferential circle around the rotating element feeding the harvested good into the feeding opening is possible, also the higher remote auger blade sections can reach towards the circumferential circle of the rotating element, so that a more intense contact between these elements in the transfer zone towards the feeding opening is achieved.

According to another feature of the invention, the margin of the feeding opening towards the surrounding sheet metal is shaped by a long bow at the side where the separation rotor runs down, and the shape of that bow is unsymmetrical in relation to the opposite side. The background of this design of the feeder opening is that at that side where the separation rotor runs down the size of the opening for feeding harvested good into the rotor housing should be kept small and close to the bottom floor, so that the harvested good, which is tangentially thrown off from the rotating element, directly runs into the feeder opening without being transported upwards and the risk of clogging or a full round rotation with the rotating element.

According to another feature the clearance between the circumferential shape of the rotating element and the circumferential shape of the rotation auger blades is less than 15 cm in the location of their closest proximity. With such a close proximity the auger blades shear off the harvested good from the circumference of the rotating element.

It is also suggested that there is a rod with a curved surface fixed at least along a part of the margin of the feeding opening. Such a rod can additionally support a scratching off of harvested good from the rotating element and to direct it into the feeder opening. The curved surface avoids kernel breakage and is not so sensitive to wear.

According to another embodiment, there are guiding rods at the inner surface of the rotor housing. Such guiding rods stabilize a constant flow of harvested good and help to achieve a transition from a linear or tangential flow to a helical flow around the separation rotor.

It is advantageous, if there is a bulge directed sidewards in the bottom floor at the side where the separation rotor runs upwards. Such a bulge is achieved if the floor on the side where the separation rotor runs downward is directed to a level equal or below of the centerline of the separation rotor in that region, and the harvested good moved over the bulge is directed towards higher levels of the separation rotor. As a further advantage, the bulge can be used to accommodate a shaft for transmitting power from the separation rotor to the feeder house, the cutterbar respective the front end or other working components or generators.

It is further suggested to use the backwall of a floor section to fix the bearing for the separation rotor or to mount an element driven by the shaft of the separation rotor.

It is also suggested that there are guiding rods fixed to the floor of the feeder house or the surrounding sheet metal. Such guiding rods are arranged in an inclined way so that their ends are pointing towards the feeding opening of the rotor housing.

The invention is now described in more detail by virtue of drawings. In the attached drawings the following aspects can be seen:
- Fig. 1: shows a side-view upon a self-propelled combine harvester.
- Fig. 2: shows a more detailed view upon the feeder house in the feeding region,
- Fig. 3: shows a perspective view upon the feeder opening and the sheet metal surrounding it.

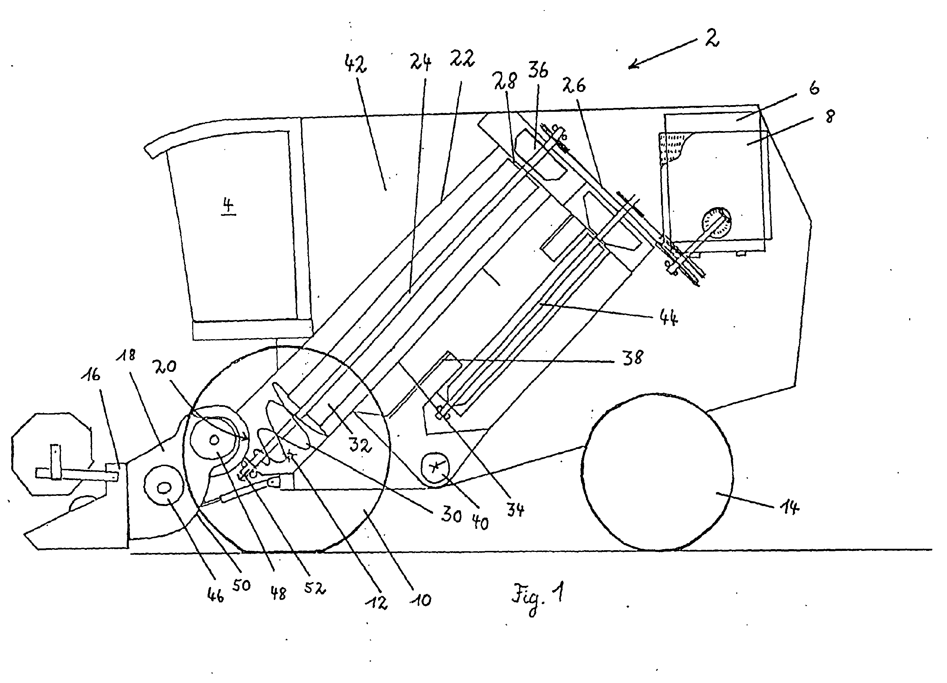

A combine harvester 2 shown in figure 1 is equipped with a driver's cabin 4, an engine 6 with a cooling system 8, a front wheel 10 with a rotational axis 12, a rear wheel 14, a front end, here shown as cutterbar 16, which could also be any other kind of suitable equipment like pick-ups, corn headers or the like, and a feeder house 18, which distributes the harvested material from the cutterbar 16 into the feeding opening 20 of the rotor housing 22, which is part of a separation unit. Inside of the rotor housing 22 there is arranged a separation rotor 24 which is rotatably driven by driving elements 26, here shown as pulley drives, from the power of engine 6. Seen along the rotational axis of the separation rotor 24 from the feeding opening 20 towards the discharge end 28 of the rotor housing 22, the front section of the separation rotor 24 comprises auger blades 30 which approximately define the length of the feeding zone where the harvested material is fed into the rotor housing 22. The middle and rearward section of the separation rotor 24 is equipped with beater plates 32 which approximately define the length of the separation zone along the length of the rotor housing 22. It is noted here that the tools for feeding the harvested material into the rotor housing and threshing and separating the harvested material may also be different from auger blades or beater plates, they are mentioned here just as examples. Of course an expert could also choose other tools which he is aware of and which serve his desired function. The bottom portion of rotor housing 22 comprises of sieve means 34, through which grain kernels and chaff may exit the rotor housing 22. The sucking blower unit 36 sucks an air flow stream at least through the sieve means into the separation zone of the rotor housing 22 and from there towards the discharge zone 28 and out of the rotor housing 22 and out of the combine harvester 2. The sucking blower unit 36 is connected in its function towards the separation rotor 24. Rotor housing 22, separation rotor 24 and sucking blower unit 36 together form the basic components of a separation unit. Grain kernels which exit the rotor housing 22 through the openings of sieve means 34 fall at least partially on the grain collecting element 38 which guides the grain kernels by gravitational forces towards the grain collecting auger 40; which distributes the collected grain into a grain conveyor - not shown -, which feeds the grain into the grain tank 42. The air flow stream generated by the sucking blower 36 is moving through the intermediate space between the sieve means 34 and the grain collecting element 38.

The description above refers to the function of a single separation unit, however, it is to be understood that of course there may be arranged two separation units as described side by side in a combine harvester, and instead of conventional sieve means there may be one or more additional separation units as described in its basic function above for a further cleaning of the separated grain, they should then be arranged underneath the first separation units.

The inclined arrangement of rotor housing 22 and the separation rotor 24, which is arranged inside of rotor housing 22, by more than 30° towards the horizontal plane brings some advantages. First of all, it reduces the speed of the harvested material inside of the rotor housing towards the discharge end 28, so that it rotates inside of the rotor housing 22 along a longer travelling path with more opportunities for separating grain kernels. Due to the fact that the gravitational forces are acting with more effect upon the heavier fractions of the harvested material like the grain kernels, they tend to move slower through the rotor housing 22, which brings some separational effect upon them in relation to the lighter fractions of the harvested material like straw or chaff An additional advantage is that the grain can be collected by simple grain collecting elements 38, which may be formed in the shape of a chute, and transported towards the collecting auger without any further driven elements. Also for using the second separation rotor 44 as a cleaning apparatus for the fraction of grain kernels and chaff which has exited the rotor housing 22, it is advantageous to have an inclined arrangement of the rotor housing 22, because the air flow stream which is moving along the outer surface of the sieve means 34 towards the sucking blower unit 36 cannot suck the grain kernels upwardly very easyly due to their weight, so that they tend to fall either onto the grain collecting element 38 or into the second grain exit towards the second separation rotor 44. Also the second separation rotor 44 is combined for its function with a sucking blower unit 54 which generates an air flow stream comparable to the air flow stream generated by the sucking blower unit 36.

The feeder house 18 contains at least two rotation elements, one front rotating element 46 and one rear rotating element 48. The shape of floor 50 of the feeder housing 18 is partially adapted to the circumference of the rotating elements 46, 48. In the region where the arrow 20 points to the line which symbolizes the crosswisely arranged cylindrical shape of the feeder house 18 which houses the rear rotating element 48 in the region of its discharge end, there may also be located the feeding opening of the rotor housing 22. The crosswisely arranged cylindrical shape of the feeder house 18 cuts into the upper half of the lengthwisely arranged substantially cylindrical shape of the rotor housing 22. The rotating energy of the separation rotor 24, 44 can be transmitted to subordinated elements, which is symbolized by arrow 52.

If the rotor housing 22 is arranged in the combine harvester 2 as described, it is possible to position the engine 6 in a location also in the top rear half portion of the combine harvester 2 behind the rear end of the rotor housing 22. This is advantageous because the power of the engine doesn't need to be transported over long distances towards the separation rotor 24, which saves costs and weight. The high arrangement of the engine also avoids that the cooling system sucks in too many straw which is blown out in a downward and rearward direction by the sucking blower means 36 and the blower of the second separation unit. The power necessary to drive the cutterbar 16 and the feeding elements 46, 48 arranged inside of the feeder house 18 or other working components or generators of hydraulic pressure or electrical energy may be transmitted by the shaft of separation rotor 24 or 44 from the rear to the front of the combine harvester 2. This saves additional drive train elements and it keeps the width of the combine harvester 2 slim. The PTO stubble shaft of the separation rotors 24, 44 may be equipped with toothed wheels which transfer the rotating energy to subordinated shafts, hydraulic pumps, electric generators, gearboxes or the like. For the sake of simplified demonstration, the possibility of driving any other components is indicated by arrow 52.

In the triangle defined by the upper half of the rotor housing 22, the rear wall of the cabin 4 and the top margin of the combine harvester 2, it is easy to accommodate the grain tank 42. If there is only one separation rotor contained in the rotor housing (two in a side-by-side arrangement are possible), the space of the grain tank 42 may even reach downwardly along the sides of rotor housing 22 so that it is designed like a saddle tank.

To achieve enough space to place the front end of rotor housing 22 as low as possible, it is advantageous to avoid a rigid front axle or a crosswisely arranged beam of the machine frame in the region proximate to the front wheel. To drive the front wheels, small hydraulic or electric motors can be placed next to each wheel so that one motor drives one wheel.

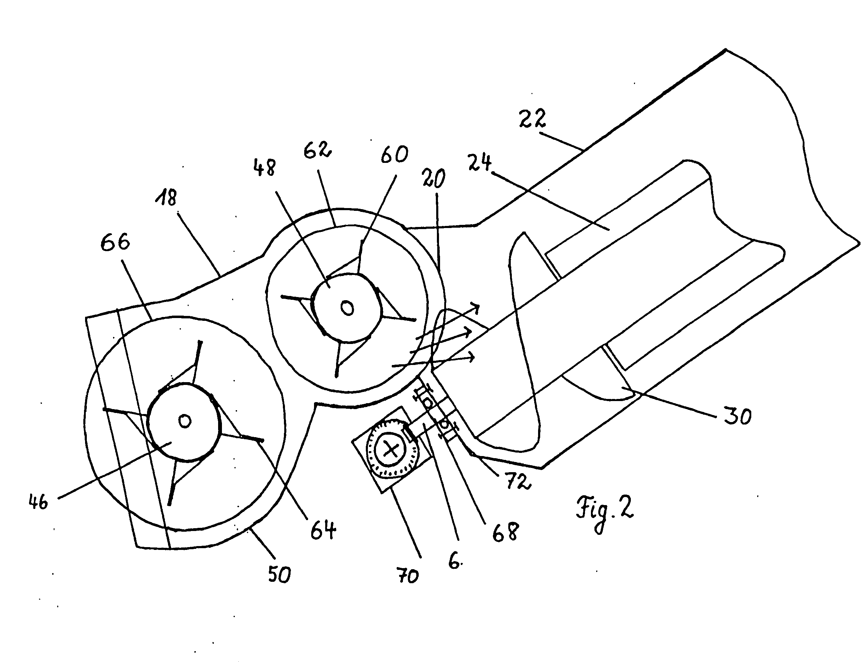

In figure 2 the relative position of the working elements towards each other can better be seen. The rotating element 48 is accommodated in the rear portion of the feeder house 18. It is equipped with feeding bars 60, and it is possible to attach special tooling to these feeding bars. Such tooling could be rasp bars for effecting a threshing action upon the harvested good fed by rotating element 48, or such tools could be elements which only grab with a limited width into the mat of harvested good so that the mat is pulled apart. That is especially advantageous if the circumferential speed of the rear rotating element 48 is faster than that of rotating element 46. The feeding bars 60 or the tools fixed on them may be adjustable in their projection towards the feeding auger blades 30, so that only little clearance between the circumference of the rotating element 48 and the auger blades 30 remains. A good clearance between the rotating element 48 and the auger blade 30 is indicated by the circumferential circle 62. In that embodiment, the clearance might be up to approximately 1 cm small. In any case, the clearance shouldn't be more than 15 cm. Also the front rotating element 46 is equipped with feeding bars 64, which can be equipped with appropriate tooling, and their circumference could be adequate to circle 66. As it can also be seen from figure 2, the front shaft 67 of the separation rotor 24 is supported by bearing 68, and it projects into the gearbox 70 from where a driving shaft for driving other components of the combine harvester is directed to the side of the combine harvester. It may also be noted that bearing 68 and therewith also front shaft 67 of the separation rotor 24 is fixed at the backwall 72 of a floor section. It is not shown in figure 2, but it is also advantageous to fix a gearbox or a generator on that backwall 72.

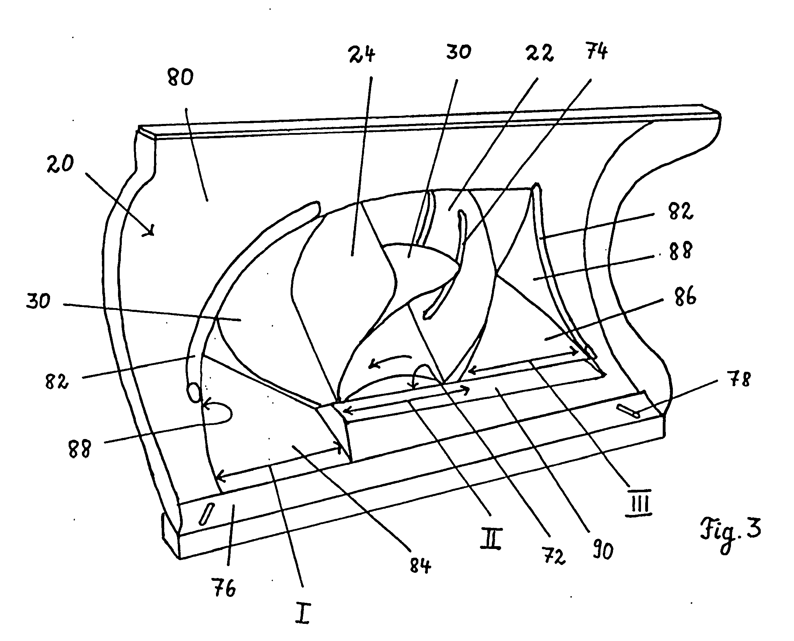

In figure 3 the preferred design of the feeding opening 20 into the rotor housing 22 can be seen. The feeder house 18 has been detached, so that an unobstructed view is possible. It can be seen that the feeding opening 20 is arranged in a plane above the separation rotor 24. In the embodiment shown the separation rotor is equipped with two auger blades 30, however, it may be any other number than two, which ever fits to the functional requirements. The separation rotor 24 is surrounded by the rotor housing 22. On the inner surface of the rotor housing 22 there are guiding rods 74 which push the harvested good grabbed by the auger blades 30 rearwardly. On the front bar 76, which is positioned between the feeder house 18 and the sheet metal surrounding the feeding opening 20, there are guiding rods 78 fixed on it so that the flow of harvested good is already guided towards the smaller width of the feeding opening 20 in relation to the full width of feeder house 18. Such guiding rods may also be positioned in any suitable number on the floor of the feeder house 18 further towards the front of the combine harvester 2.

It can also be that the sheet metal 80, which surrounds the feeding opening 20, has a curved form which partially encircles the rotating element 48. The sheet metal 80 may be made from just one piece, however, due to the complicated form of the floors it might be advantageous to connect or weld together different sections of sheet metal to one piece so that the shown structure is achieved. Seen from the side, the sheet metal 80 has a substantially planar surface which encircles the feeding opening 20. The feeding opening 20 is a big hole in the surface of the sheet metal 80. Looking on the hole of the feeding opening 20, it can be seen that the hole is wider at its bottom than at its top. The reason for this shape is that the harvested good is fed underneath the rotating element 48, so that it approaches the feeding opening 20 close to the bottom floor of feeder house 18. The harvested good is thrown into the feeding opening 20 by rotating element 48 with a tangential direction, and most of the harvested good leaves the rotating element 48 with a direction as indicated by the three arrows in figure 2. With the wide mouth of feeding opening 20 at the bottom most of the harvested good can be swallowed by the separation rotor 24. Those harvested good which hasn't left the rotating element 48 in approximately the first third of the height of the feeding opening 20, tends to stick on the rotating element 48 and to be taken with by the rotating element 48 for one full revolution. To avoid this, precautions need to be taken.

One precaution is to taper the width of the feeding opening 20 towards its top region so that the harvested good which sticks on the rotating element 48 is forced to a movement into a sideward direction, which might help to separate the harvested good from the rotating element 48. It should be considered that the hole of the feeding opening 20 should be smaller in the top region of it on the side where the separation rotor 24 is moving down, because the harvested good should be directed into a downward direction in that region to be swallowed without clogging by the separation rotor 24. To achieve a gentle transition from the wide opening at the bottom to the tighter opening at the top of the feeding opening 20, the margin of the feeding opening 20 is shaped in a long bow. On the opposite side, where the separation rotor is moving upwards, the hole may be bigger in the top region because there it is appreciated if the harvested good is thrown far into the space of rotor housing 22. As a result, an asymmetric shape of the hole of feeding opening 20 is achieved. This asymmetric shape supports the required change of moving direction of the harvested good from a linear or tangential direction into a helical movement inside of the rotor housing 22.

Another precaution is the arrangement of a rod 82 with a curved surface along a part of the margin of feeding opening 20. The curved surface does not only reduce kernel breakage, it also avoids that straw might get cut if it passes the rod, and only a part of the straw is fed into the rotor housing 20, and the other part is continuing its rotation with rotating element 48. This rod 82 is arranged in a location where harvested good should be combed off from the circumference of rotating element 48 and directed into the feeding opening 20. Rod 82 may project over the surface of sheet metal 80, then it reduces the clearance between the circumference of rotating element 48 and the surface of sheet metal 80 even further than already suggested.

In figure 3 also different floors for feeding the harvested good into the rotor housing 22 are shown. In the example there are shown three floors I, II and III. Of course, this figure may also be altered to two or four. All three floors have approximately the same width, but a different height level from which they transfer the harvested good into the rotor housing, and also a different shape of the floor. Floor I directs the harvested good with its plane 84 to a very low level in the rotor housing 22 on the side where the separation rotor 24 runs downwardly. Floor I might even be directed to a height level of the rotor shaft or even below that height. The medium floor II directs the harvested good directly upon the tube of separation rotor 24 inside of the rotor housing 22. Floor III lifts the harvested good upwards with its plane 86, and its plane 86 reaches further into the rotor housing 22, so that by this floor III the harvested good is passed over into the rotor housing 22 in a higher and more remote position. By these multiple transfer locations around one revolution of the separation rotor 24 the moving direction of the harvested good from a linear or tangential movement into a helical movement is supported. The auger blades 30 can also take over the harvested good from different locations, by which bulks of material are separated, and a more even distribution of material inside of the rotor housing 22 is achieved. The transfer of harvested good may be eased and supported by additional guiding planes 88, which push the harvested good sidewards towards the rotor housing 22.

In figure 3 also bulge 90 can be seen. Underneath this bulge, a shaft can be accommodated which transmits the power from the separation rotor to rotating elements 46, 48, the cutterbar and other components such like generators. The surface of the bulge is designed that it slightly lifts the harvested good up to the level on which the front of the tube of the separation rotor 24 is located.

The basic structure of the feeding opening 20 can be used with minor adaptions also in a combine harvester with two separation rotors 24 aligned side by side. If both separation rotors 24 are rotating in the same direction, two of the feeding openings 20 are arranged side by side with an at least substantially similar design. If the separation rotors 24 are rotating in different directions, the shape of one feeding opening 20 will substantially be reflected along a vertical axis to show the shape of the feeding opening 20 towards the other separation rotor 24 like a mirror image. Of course, a special design is needed in the region where the margins of both feeding openings 20 are close to each other. In that region, the sheet metal may be designed very slim, or a rod is arranged in the region between both feeding openings 20 to divide the flow of harvested good into two streams into the respective rotor housings 22.

The examples shown in the figures and explained above are not meant to be limited towards the embodiments shown. Of course it is possible for an expert to adapt the concept described towards the requirements of his application, and functional elements of one example may be integrated into the concept from another example.

## Claims

1. Combine harvester (2) with a feeder house (18) distributing harvested goods from the front end towards at least one separation unit comprising of a rotary driven separation rotor (24) arranged in a rotor housing (22) with a feeding zone, where harvested material is fed into the rotor housing (22) from a position above the shaft of the separation rotor (24) through a feeding opening (20) which is wider at its bottom than at the top arranged in a plane above the axis of the separation rotor (24) by a rotating element (48) arranged with a crosswise rotation axis, said axis being located higher than the front shaft stubble of the separation rotor (24), the rotating element (48) feeding the harvested goods underneath its rotation axis towards the feeding opening (20), the feeding opening (20) being surrounded by sheet metal (80), a separation zone with sieve means (34) arranged in the rotor housing (22) of said separation zone and a discharge zone which is located at the discharge end (28) of the rotor housing (22),
**characterized in;**
**that** the separation rotor (24) is equipped with auger blades (30) in the feeding zone, that sheet metal (80) projects up to the width of the feeder house (18) and which is shaped into a concave bend so that it is adapted at least partially to the circumferential shape of the rotating element (48), and that in the feeding opening (20) is provided with a plurality of floors (I, II, III) which guide the harvested material into spaces defined by the auger blades (30) of the separation rotor (24).

2. Combine harvester according to claim 1,
**characterised in,**
**that** the separation rotor (24) is equipped with auger blades (30) in the feeding zone, a rotating element (48) is arranged with a crosswise rotation axis, said axis being located higher than the front shaft stubble of the separation rotor (24), the rotating element (48) feeds the harvested goods underneath its rotation axis towards the feeding opening (20), the rotating element (48) is accommodated in the rear portion of the feeder house, and that the rotating axis of the rotating element (48) is coaxial with the rotation axis of the feeder house (18).

3. Combine harvester according to claim 1 or 2,
**characterized in,**
**that** in the feeding opening (20) is a plurality of floors (I, II, III) which guide the harvested material into spaces defined by the auger blades (30) of the separation rotor (24).

4. Combine harvester according to claim 3,
**characterized in,**
**that** the floors (I, II, III) in the feeding opening (20) direct the harvested good in different height levels into the rotor housing (22).

5. Combine harvester according to claim 1, 2 or 3,
**characterized in,**
**that** the diameter of the auger blades (30) is tapered towards the front.

6. Combine harvester according to one or more of the preceding claims,
**characterized in,**
**that** the margin of the feeding opening (20) towards the surrounding sheet metal (80) is shaped by a long bow at the side where the separation rotor (24) runs down, and the shape of that bow is unsymmetrical in relation to the opposite side.

7. Combine harvester according to one or more of the preceding claims,
**characterized in,**
**that** the clearance between the circumferential shape of the rotating element (48) and the circumferential shape of the rotating auger blades (30) is less than 15 cm in the location of their closest proximity.

8. Combine harvester according to one or more of the preceding claims,
**characterized in,**
**that** there is a rod (82) with a curved surface fixed at least along a part of the margin of the feeding opening (20).

9. Combine harvester according to one or more of the preceding claims,
**characterized in,**
**that** there is a bulge (90) directed sidewards in the bottom floor at the side where the separation rotor (24) runs upwards.

10. Combine harvester according to one or more of the preceding claims,
**characterized in,**
**that** the backwall (72) of a floor section (I, II, III) is used to fix the bearing for the separation rotor (24).

11. Combine harvester according to one or more of the preceding claims,
**characterized in,**
**that** the backwall (72) of a floor section (I, II, III) is used to mount an element driven by the shaft of the separation rotor (24).

12. Combine harvester according to one or more of the preceding claims,
**characterized in,**
**tha**t there are guiding rods (78) fixed to the floor of the feeder house or the surrounding sheet metal (80).

## Patentansprüche

1. Mähdrescher (2) aufweisend ein Zuführgehäuse (18), Erntegut verteilend vom vorderen Ende in Richtung zu mindestens einer Trenneinheit aufweisend einen in einem Rotorgehäuse (22) mit einer Zuführzone rotierend angetriebenen Trennrotor (24), wobei Erntegut zugeführt wird von einer Position oberhalb der Welle des Trennrotors durch eine Zuführöffnung (20), die im unteren Teil weiter ist als im oberen Teil und oberhalb der Achse des Trennrotors (24) angeordnet ist, durch ein mit quer verlaufender Drehachse angeordnetes rotierendes Element (48), wobei die Achse höher angeordnet ist als der vordere Wellenstummel des Trennrotors (24), wobei das rotierende Element (48) das Erntegut unterhalb seiner Drehachse in Richtung zur Zuführöffnung (20) fördert, wobei die Zuführöffnung (20) von Blech (80) umgeben ist, eine Trennzone mit Siebmitteln (34) im Rotorgehäuse (22) der Trennzone und eine Austragzone am Austragende (28) des Rotorgehäuses (22) angeordnet ist,
**dadurch gekennzeichnet,**
**dass** der Trennrotor (24) mit Wendeln 3(0) in der Zuführzone ausgerüstet ist, dass das Blech (80) bis zur Breite des Zuführgehäuses (18) vorsteht und mit einer konkaven Krümmung geformt ist, so dass es mindestens teilweise an die Umkreisform des rotierenden Elements (48) angepasst ist, und dass in der Zuführöffnung (20) mehrere Böden (I, II, III) bereitgestellt sind, die das Erntegut in von den Wendeln (30) des Trennrotors (24) definierten Räume gelenkt wird.

2. Mähdrescher nach Anspruch 1,
**dadurch gekennzeichnet,**
**dass** der Trennrotor (24) mit Wendeln (30) in der Zuführzone ausgerüstet ist, ein rotierendes Element (48) mit quer verlaufender Drehachse angeordnet ist, wobei die Drehachse höher als der vordere Wellenstummel des Trennrotors (24) angeordnet ist, das rotierende Element (48) das Erntegut unterhalb seiner Drehachse in Richtung zur Zuführöffnung (20) fördert, das rotierende Element (48) im hinteren Bereich des Zuführgehäuses angeordnet ist, und dass die Drehachse des rotierenden Elements koaxial zur Drehachse des Zuführgehäuses (18) ist.

3. Mähdrescher nach Anspruch 1 oder 2,
**dadurch gekennzeichnet,**
**dass** die Zuführöffnung (20) aus mehreren Böden (I, II, III) besteht, die das Erntegut in von den Wendeln (30) des Trennrotors (24) definierte Räume lenkt.

4. Mähdrescher nach Anspruch 3,
**dadurch gekennzeichnet,**
**dass** die Böden (I, II, III) in der Zuführöffnung (20) das Erntegut auf unterschiedlichen Höhen in das Rotorgehäuse (22) lenken.

5. Mähdrescher nach Anspruch 1, 2 oder 3,
**dadurch gekennzeichnet,**
**dass** sich der Durchmesser der Wendeln (30) zum vorderen Teil hin verjüngt.

6. Mähdrescher nach einem oder mehreren der vorhergehenden Ansprüche,
**dadurch gekennzeichnet,**
**dass** die Begrenzung der Zuführöffnung (20) in Richtung zum umgebenden Blech (80) auf der Seite, wo sich der Trennrotor (24) nach unten erstreckt, die Form eines langen Bogens hat und die Form dieses Bogen im Verhältnis zur gegenüber liegenden Seite asymmetrisch ist.

7. Mähdrescher nach einem oder mehreren der vorhergehenden Ansprüche,
**dadurch gekennzeichnet,**
**dass** das Spiel zwischen der Umkreisform des rotierenden Elements (48) und der Umkreisform der rotierenden Wendeln (30) an der Stelle des kürzesten Abstands weniger als 15 cm beträgt.

8. Mähdrescher nach einem oder mehreren der vorhergehenden Ansprüche,
**dadurch gekennzeichnet,**
**dass** eine Stange (82) mit einer gekrümmten Fläche mindestens entlang einem Teil der Begrenzung der Zuführöffnung (20) angeordnet ist.

9. Mähdrescher nach einem oder mehreren der vorhergehenden Ansprüche,
**dadurch gekennzeichnet,**
**dass** eine Auskragung (90) seitlich in den untersten Boden auf der Seite, wo sich der Trennrotor (24) nach oben erstreckt, gerichtet ist.

10. Mähdrescher nach einem oder mehreren der vorhergehenden Ansprüche,
**dadurch gekennzeichnet,**
**dass** die Rückwand (72) einer Bodensektion (I, II, III) zum Anbau des Lagers für den Trennrotor (24) benutzt wird.

11. Mähdrescher nach einem oder mehreren der vorhergehenden Ansprüche,
**dadurch gekennzeichnet,**
**dass** die Rückwand (72) einer Bodensektion (I, II, III) zum Anbau eines vom der Welle des Trennrotors (24) angetriebenen Elements benutzt wird.

12. Mähdrescher nach einem oder mehreren der vorhergehenden Ansprüche,
**dadurch gekennzeichnet,**
**dass** Führungsstangen (78) am Boden des Zuführgehäuses oder dem umgebenden Blech (80) befestigt sind.

## Revendications

1. Moissonneuse-batteuse (1) avec un caisson d'alimentation (18) distribuant des produits récoltés de l'extrémité avant vers au moins une unité de séparation comprenant un rotor de séparation (24) entraîné en rotation, agencé dans un carter de rotor (22), avec une zone d'alimentation, où du matériau récolté est amené dans le carter de rotor (22) à partir d'une position au-dessus de l'arbre du rotor de séparation (24) par une ouverture d'alimentation (20) qui est plus large au niveau de son fond qu'au niveau de son sommet, agencée dans un plan au-dessus de l'axe du rotor de séparation (24), par un élément rotatif (48) agencé avec un axe de rotation transversal, ledit axe étant situé plus haut que l'extrémité avant de l'arbre avant du rotor de séparation (24), l'élément rotatif (48) amenant les produits récoltés en dessous de son axe de rotation vers l'ouverture d'alimentation (20), l'ouverture d'alimentation (20) étant entourée par une tôle métallique (80), une zone de séparation avec des moyens de criblage (34) agencés dans le carter de rotor (22) de ladite zone de séparation et une zone de décharge qui est située à l'extrémité de décharge (28) du carter de rotor (22), **caractérisée en ce que** le rotor de séparation (24) est équipé d'aubes (30) de vis sans fin dans la zone d'alimentation, **en ce que** la tôle métallique (80) fait saillie vers le haut jusqu'à la largeur du caisson d'alimentation (18) et qui est formée en une courbure concave de sorte qu'elle est adaptée au moins en partie à la forme circonférentielle de l'élément rotatif (48), et **en ce que** l'ouverture d'alimentation (20) est pourvue d'une pluralité de plateaux (I, II, III) qui guident le produit récolté dans des espaces définis par les aubes (30) de vis sans fin du rotor de séparation (24).

2. Moissonneuse-batteuse selon la revendication 1 **caractérisée en ce que** le rotor de séparation (24) est équipé d'aubes (30) de vis sans fin dans la zone d'alimentation, un élément rotatif (48) est agencé avec un axe de rotation transversal, ledit axe étant situé plus haut que l'extrémité avant de l'arbre avant du rotor de séparation (24), l'élément rotatif (48) amène les produits récoltés en dessous de son axe de rotation vers l'ouverture d'alimentation (20), l'élément rotatif (48) est logé dans la partie arrière du caisson d'alimentation, et **en ce que** l'axe de rotation de l'élément rotatif (48) est coaxial à l'axe de rotation du caisson d'alimentation (18).

3. Moissonneuse-batteuse selon la revendication 1 ou 2, **caractérisée en ce que** dans l'ouverture d'alimentation (20), il y a une pluralité de plateaux (1, II, III) qui guident le matériau récolté dans des espaces définis par les aubes (30) de vis sans fin du rotor de séparation (24).

4. Moissonneuse-batteuse selon la revendication 3, **caractérisée en ce que** les plateaux (I, II, III) dans l'ouverture d'alimentation dirigent le produit récolté à différents niveaux de hauteur dans le carter de rotor (22).

5. Moissonneuse-batteuse selon la revendication 1, 2 ou 3, **caractérisée en ce que** le diamètre des aubes (30) de vis sans fin est rétréci vers l'avant.

6. Moissonneuse-batteuse selon une ou plusieurs des revendications précédentes, **caractérisée en ce que** la marge de l'ouverture d'alimentation (20) en direction de la tôle métallique (80) environnante est formée par une longue courbe du côté où le rotor de séparation (24) va vers le bas, et la forme de cette courbe est asymétrique par rapport à l'autre côté.

7. Moissonneuse-batteuse selon une ou plusieurs des revendications précédentes, **caractérisée en ce que** le jeu entre la forme circonférentielle de l'élément rotatif (48) et la forme circonférentielle des aubes (30) de vis sans fin en rotation est de moins de 15 cm à l'endroit de leur plus grande proximité.

8. Moissonneuse-batteuse selon une ou plusieurs des revendications précédentes, **caractérisée en ce qu'**il y a une barre (82) avec une surface courbe fixée au moins le long d'une partie de la marge de l'ouverture d'alimentation (20).

9. Moissonneuse-batteuse selon une ou plusieurs des revendications précédentes, **caractérisée en ce qu'**il y a un renflement (90) dirigé latéralement dans le plateau inférieur du côté où le rotor de séparation (24) va vers le haut.

10. Moissonneuse-batteuse selon une ou plusieurs des revendications précédentes, **caractérisée en ce que** la paroi arrière (72) d'une section de plateau (I, II, III) est utilisée pour fixer le palier pour le rotor de séparation (24).

11. Moissonneuse-batteuse selon une ou plusieurs des revendications précédentes, **caractérisée en ce que** la paroi arrière (72) d'une section de plateau (I, II, III) est utilisée pour monter un élément entraîné par l'arbre du rotor de séparation (24).

12. Moissonneuse-batteuse selon une ou plusieurs des revendications précédentes, **caractérisée en ce qu'**il y a des barres de guidage (78) fixées au plancher du caisson d'alimentation ou à la tôle métallique (80) environnante.
